# EUROPEAN PATENT SPECIFICATION

(11) **EP 4 475 665 B1**
(45) Date of publication and mention of the grant of the patent: **04.02.2026**
(21) Application number: 22822886.2
(22) Date of filing: 24.11.2022
(51) Int. Cl.: A01G 25/09, A62C 27/00, B25J 5/00

(54) **TWO-WHEELED ROBOTIC VEHICLE**
ZWEIRÄDRIGES ROBOTERFAHRZEUG
VÉHICULE ROBOTISÉ À DEUX ROUES

(30) Priority: 10.02.2022 EP 22156064
(43) Date of publication of application: 18.12.2024
(73) Proprietor: Husqvarna AB, 561 82 Huskvarna (SE)
(72) Inventor: JÄGENSTEDT, Patrik, 56162sew Tenhult (SE); TURESSON, Alexander, 12243 Enskede (SE); BERGMAN, Joakim, 17975 Skå, Mariedal (SE); ALEXIUSSON, Mikael, 52338 Ulricehamn (SE)
(74) Representative: Finkele, Rolf
(86) International application number: PCT/EP2022/083174
(87) International publication number: WO 2023/151841

(56) References cited:
- EP-A1- 3 250 407
- FR-A1- 2 374 842
- US-A- 4 204 643
- US-A1- 2008 283 637
- US-A1- 2016 316 736
- US-A1- 2016 366 842

## Description

### TECHNICAL FIELD

The present disclosure relates to a two-wheeled vehicle. More specifically, the present disclosure relates to a two-wheeled robotic vehicle that may be used for irrigation, firefighting, cleaning, or other related applications that may require spraying of a liquid.

### BACKGROUND

Many two-wheeled vehicles and specifically two-wheeled robotic vehicles are known for use with agricultural, mining, defense, education, research, medical practice, space, logistics, urban and domestic applications. The two-wheeled robotic vehicles are advantageously simple, compact and possess high degree of maneuverability. However, due to the absence of a third wheel, stability is an inherent challenge with the two-wheeled robotic vehicles both statically and dynamically.

For many applications it is preferable for such vehicles to be statically stable. In order to ensure stability, the two-wheeled robotic vehicle is provided with a payload between the two wheels of the two-wheeled robotic vehicle.

The French patent application FR 2 374 842 A1 describes a mobile crop spraying apparatus. The apparatus consists of a wheel mounted drum and a spray nozzle fixed on top of a movable rack. The apparatus is driven nearby a water supply line. The water supply is provided through the hollow axle of the drum and guided into a hose that is wound thereon. During spraying of the crops the wheel mounted drum stays in its place, but as the drum is rotatable connected to the nonmoving wheels it allows the hose to be wound and unwound from it. Thus the hose can constantly supply a mobile spray nozzle with water while it is fixed on top of a movable rack.

An example of a two-wheeled robotic vehicle with a payload is provided in the European patent application EP 3 250 407 A1 (hereinafter referred to as '407 reference). The '407 reference provides a two-wheeled robotic vehicle with a primary support platform between the two wheels. The primary support platform is disposed at the top of the robotic vehicle and offset to a rotation axis of the two wheels. The primary support platform is adapted to support a payload. The payload includes apparatus and systems for autonomous functioning of the two-wheeled robotic vehicle. However, there is still a need for an improved design of the two-wheeled robotic vehicle. The design should be such that an addition of the payload to the two-wheeled robotic vehicle improves the stability of the two-wheeled robotic vehicle. Further, the design should allow the flexibility for choosing the payload to improve the utility of the two-wheeled robotic vehicle.

### SUMMARY

In view of the above, it is an objective of the present invention to solve or at least reduce the drawbacks discussed above. The objective is at least partially achieved by a robotic vehicle for irrigation of a ground surface according to claim 1. The robotic vehicle includes a pair of wheels adapted to propel the robotic vehicle on the ground surface. The pair of wheels include a first wheel and a second wheel. At least one nozzle is adapted to spray a liquid. Further, a payload is disposed between the first wheel and the second wheel. The robotic vehicle is characterized in that the payload is defined around an axis passing through a center of the first wheel and a center of the second wheel.

Thus, the present disclosure provides a two-wheeled robotic vehicle that may be used for a wide range of applications such as, but not limited to, irrigation, cleaning, firefighting, and the like, that may involve spraying of the liquid. The robotic vehicle includes the payload which may be retrofitted with the robotic vehicle. The payload may be a storage volume, a liquid spraying equipment or a related accessory. Further the payload may include a control system for autonomous working of the robotic vehicle. Furthermore, the payload may inherently improve the stability of the robotic vehicle.

According to an embodiment of the present disclosure, the payload is a water reservoir. The payload serves to store the water for use with various spraying applications. The payload with added weight of the water may serve to improve the stability of the robotic vehicle.

According to an embodiment of the present disclosure, the payload is a hose reel. The payload serves as the hose reel. A hose of the hose reel may be connected to a tap or any other liquid source. The robotic vehicle may then move and operate within a defined working area thereby unrolling or unwinding the hose. The liquid from the liquid source may then be sprayed by the at least one nozzle coupled with the axle of the robotic vehicle. Further, the hose reel may also serve to inherently improve the stability of the robotic vehicle by virtue of lowered center of gravity of the robotic vehicle.

According to an embodiment of the present disclosure, a central payload axis of the payload is offset by a length relative to the axis passing through the center of the first wheel and the center of the second wheel. The central payload axis may be marginally set at the offset to the respective centers of the first wheel and the second wheel to allow just enough ground clearance for allowing smooth and efficient working of the various payloads such as the hose reel. Further, the stability of the robotic vehicle is not compromised due to the offset.

According to an embodiment of the present disclosure, the payload is independent of the pair of wheels such that the payload does not rotate with the rotation of the pair of wheels. The payload (say the water reservoir) may not be required to rotate and hence may be disengaged from the axle or the pair of wheels.

According to an embodiment of the present disclosure, the payload is dependent on the pair of wheels such that the payload rotates with the rotation of the pair of wheels. The payload (say the hose reel) may rotate in proportion to the rotation of the pair of wheels to wind and unwind the hose reel for various application such as irrigation, cleaning, and the like.

According to an embodiment of the present disclosure, the pair of wheels are mechanically linked by an axle. The axle as used generally with vehicles may be used to deliver power to the pair of wheels or assist in steering of the pair of wheels. Further, the axle may process shocks from the uneven surfaces on which the robotic vehicle may travel.

According to an embodiment of the present disclosure, the at least one nozzle is removably coupled with the robotic vehicle. The at least one nozzle may be removably coupled for easy and convenient maintenance of the at least one nozzle. Further, the at least one nozzle may be removed for use with other tools (say spray guns) when the robotic vehicle is not in use or when the spraying of the liquid using the robotic vehicle is not desired.

According to an embodiment of the present disclosure, the at least one nozzle is pivotably coupled with the robotic vehicle. The at least one nozzle is pivotable and may constantly change orientation to produce different spray parameters such as spray patterns, spray distances and the like.

According to an embodiment of the present disclosure, the pair of wheels is driven by a drive module. The drive module may facilitate smooth rotation of the pair of wheels on the ground surface. Further, the rotation parameters (say torque) may be controlled by fine-tuning the drive module.

According to an embodiment of the present disclosure, the drive module includes an electric motor. The electric motor may be a compact, cost-effective, durable and an eco-friendly solution for driving the pair of wheels of the robotic vehicle.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a robotic vehicle with a central axis of a water reservoir passing through a center of a first wheel and a center of a second wheel, in accordance with an aspect of the present disclosure;
**FIG. 2** shows a perspective view of a robotic vehicle with a central axis of a hose reel passing through a center of a first wheel and a center of a second wheel, in accordance with an aspect of the present disclosure;
**FIG. 3** shows a perspective view of a robotic vehicle with a central axis of a payload (say a hose reel) provided at an offset to a center of a first wheel and a center of a second wheel, in accordance with an aspect of the present disclosure; and
**FIG. 4** shows a perspective view of a robotic vehicle with a payload, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

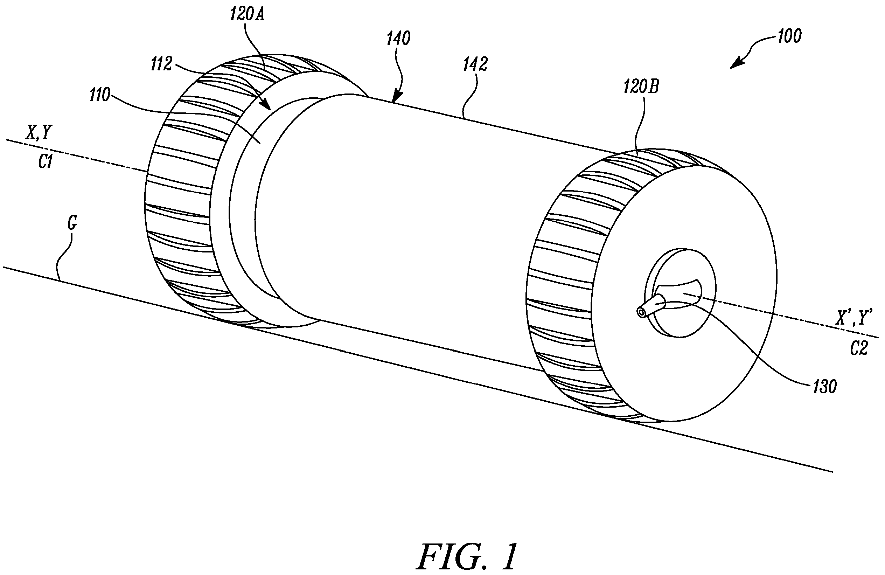

**FIG. 1** illustrates a robotic vehicle **100.** The robotic vehicle **100** of the present disclosure is used for irrigation of a ground surface "G". However, the robotic vehicle **100** may be used for a wide range of other applications, such as, but not limited to, firefighting, cleaning, mining, defense, education, research, medical practice, space, and logistics. The robotic vehicle **100** may move and operate within a defined working area (not shown) based on an output from a control system (not shown).

The control system may include a plurality of sensors, an electronic circuitry and other related accessories known in the art useful for the operation of the robotic vehicle **100.** The control system may be wirelessly connected to a smartphone and the like. The control system may be externally controlled to manipulate the movement and operation of the robotic vehicle **100.** Further, the control system may be electrically coupled to a drive module (not shown) for driving the robotic vehicle **100.** In some embodiments, the control system may be electrically coupled to the drive module using a plurality of electric wires. In some embodiments, the control system may be electrically coupled to the drive module wirelessly using a transmitter and a receiver. The transmitter may be fitted to the control system while the receiver may be fitted to the drive module. In some embodiments, there may be a bi-directional conversation between the control system and the drive module.

The robotic vehicle **100** is illustrated as a two-wheeled robotic vehicle **100.** The two-wheels are a pair of wheels **120A, 120B** adapted to propel the robotic vehicle **100** on the ground surface "G". The pair of wheels **120A, 120B** may have any shape and size known in the art without limiting the scope of the present disclosure in any manner. In some embodiments, the size of the pair of wheels **120A, 120B** may be large enough to easily move or maneuver through different terrains. The pair of wheels **120A, 120B** includes a first wheel **120A** and a second wheel **120B.** The first wheel **120A** of the pair of wheels **120A, 120B** defines a center "C1" whereas the second wheel **120B** of the pair of wheels **120A, 120B** defines a centers "C2".

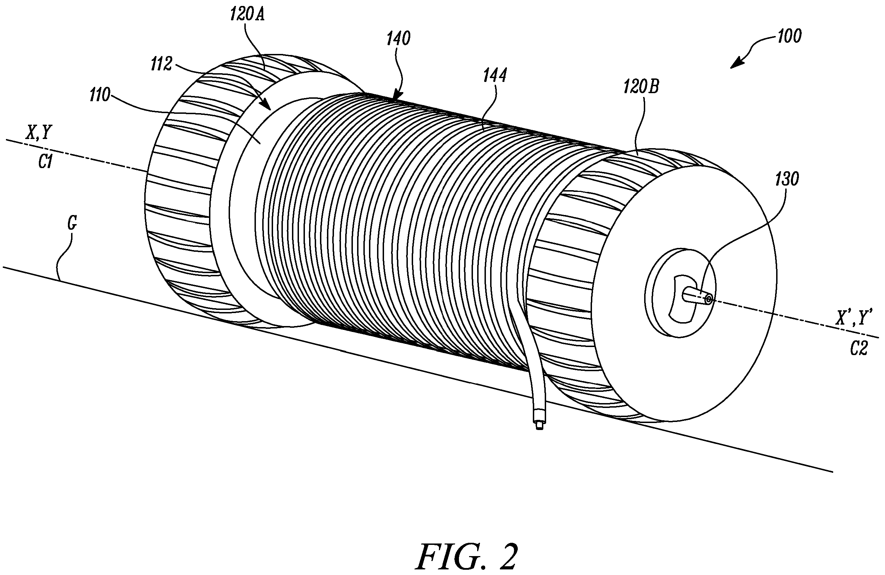

In some embodiments, the pair of wheels **120A, 120B** of the robotic vehicle **100** are mechanically linked by an axle **110** (as shown in **FIGS. 1** and **2****).** The axle **110** is along an axis **Y-Y'** passing through the center "C1" of the first wheel **120A** and the center "C2" of the second wheel **120B.** The axle **110** includes a first end **112** and a second end (not shown). The axle **110** may be substantially covered with a stationary hollow metallic tube (not shown). In an embodiment, the hollow metallic tube may act as the axle **110.** The hollow metallic tube may prevent the axle **110** from damage due to any external factors. In some embodiments, the hollow metallic tube may preferably be made from aluminum. However, the hollow metallic tube may be made from any other metallic material known in the art without limiting the scope of the present disclosure in any manner. The first end **112** and the second end of the axle **110** may not be covered with the hollow metallic tube. The first wheel **120A** may be coupled towards the first end **112** of the axle **110** and the second wheel **120B** may be coupled towards the second end of the axle **110.**

The pair of wheels **120A, 120B** may respectively be coupled near the first end **112** and the second end of the axle **110** but not particularly at the extremes of the first end **112** and the second end of the axle **110** to leave some space to retrofit some accessories, such as, but not limited to, a nozzle **130.** In some embodiments, the pair of wheels **120A, 120B** may respectively be coupled at the first end **112** and the second end of the axle **110.**

In some embodiments, the pair of wheels **120A, 120B** and the axle **110** may be provided with dampers (not shown) to avoid shocks incurred due to movement on any uneven surfaces, among other considerations.

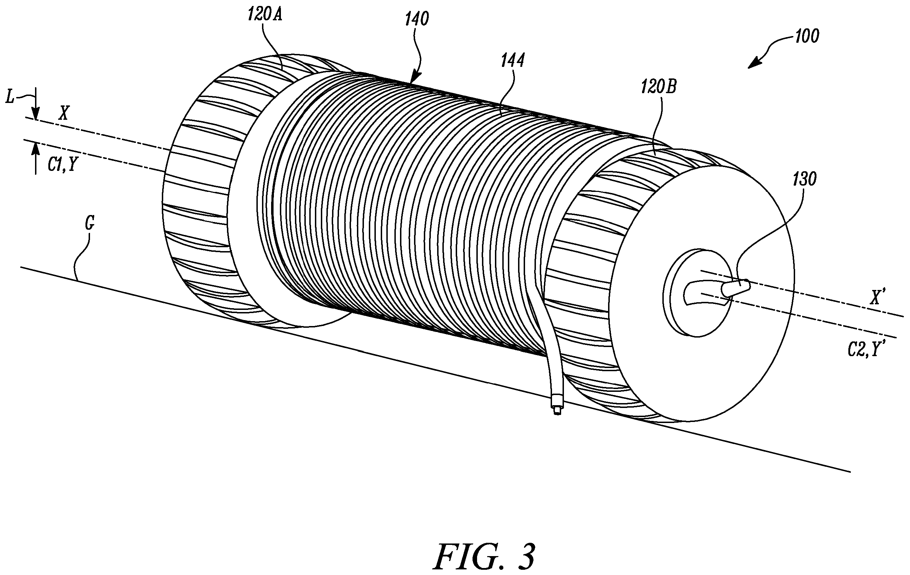

In some embodiments, the pair of wheels **120A, 120B** of the robotic vehicle **100** are mechanically independent (as shown in **FIG. 3****).** The pair of wheels **120A, 120B** are provided along the axis **Y-Y'** passing through the center "C1" of the first wheel **120A** and the center "C2" of the second wheel **120B.** However, the pair of wheels **120A, 120B** of the robotic vehicle **100** are not linked by the axle **110.** In this embodiment, the pair of wheels **120A, 120B** of the robotic vehicle **100** may be a pair of castor wheels. However, the pair of wheels **120A, 120B** may be any other type of wheels without limiting the scope of the present disclosure in any manner.

In some embodiments, the centers "C1, C2" are along the axle **110** (as shown in **FIGS. 1** and **2****)** or the axis **Y-Y'** (as shown in **FIGS. 1****,** **2** and **3****).** In some embodiments, the position of centers "C1, C2" relative to the axle **110** or the axis **Y-Y'** may be varied as per requirement when the robotic vehicle **100** moves within the defined working area. Thus, the pairs of wheels **120A, 120B** may be rotatably turnable relative to the axle **110** or the axis **Y-Y'** for easy and slip-free maneuvering of the robotic vehicle **100** within the defined working area. In some embodiments, the pair of wheels **120A, 120B** may be turnable by 360 degrees.

The pair of wheels **120A, 120B** whether linked by the axle **110** or mechanically independent of the axle **110** may be driven by the drive module. The drive module may facilitate smooth rotation of the pair of wheels **120A, 120B** on the ground surface "G". Further, the rotation parameters (say torque) may be controlled by fine-tuning the drive module. In some embodiments, the drive module may be a pair of drive modules associated with the respective wheels (the first wheel **120A** and the second wheel **120B).** In some embodiments, each of the drive modules may advantageously be housed substantially within the respective wheels **120A, 120B** to save space and improve overall aesthetics of the robotic vehicle **100.** In some embodiments, each of the drive modules may include at least one drive motor. The drive motor may be provided with primary or supplementary electric power for extending the robotic vehicle **100** runtime. The source of electric power may be a battery, or any other electric power source known in the art. In some embodiments, there may be a docking station within or near to the defined working area of the robotic vehicle **100** for providing electric power to the drive module of the robotic vehicle **100.**

In some embodiments, the at least one drive module may be an electric motor. The electric motor may be a compact, cost-effective, durable and an eco-friendly solution for driving the pair of wheels **120A, 120B** of the robotic vehicle **100.** However, the application of alternative sources of motive power including hydraulic or pneumatic motors, as well as petrol, diesel or LPG engines may be well within the scope of the present disclosure.

Further, at least one nozzle **130** is coupled with the robotic vehicle **100** such that the at least one nozzle **130** is adapted to spray a liquid. The liquid may be water or fertilizer. However actual implementation of the present disclosure may employ any other liquid known in the art to cater to various applications requiring spraying or simply delivery of fluid.

According to the invention, the at least one nozzle **130** is coupled with the axle **110.** In some embodiments, the at least one nozzle **130** may be oriented along the axle **110.** In some embodiments, the at least one nozzle **130** may be oriented at an angle to the axle **110.** In some embodiments, the at least one nozzle **130** may be at an angle to the center "C1" of the first wheel **120A** of the pair of wheels **120A, 120B.** In some embodiments, the at least one nozzle **130** may be at an angle to the center "C2" of the first wheel **120B** of the pair of wheels **120A, 120B.** In some embodiments, the at least one nozzle **130** may be at an angle to the center "C1, C2" of both the wheels **120A, 120B** of the pair of wheels **120A, 120B.** In some embodiments, the at least one nozzle **130** may be along the center "C1, C2" of both the wheels **120A, 120B** of the pair of wheels **120A, 120B.** In some embodiments, one nozzle **130** may be coupled towards the first end **112** of the axle **110** and another nozzle **130** is coupled towards the second end of the axle **110.** In some embodiments, one nozzle **130** may be coupled at the first end **112** of the axle **110** and another nozzle **130** may be coupled at the second end of the axle **110.**

In some embodiments, the at least one nozzle **130** may be two nozzles with different shapes at the respective outlets to vary the spray distance with respect to the nozzles **130.** However actual implementation of the present disclosure may have any type, number, placement, arrangement, and dimensions of the at least one nozzle **130.**

In some embodiments, the at least one nozzle **130** may be removably coupled with the robotic vehicle **100.** The at least one nozzle **130** may be removably coupled for easy and convenient maintenance of the at least one nozzle **130.** Further, the at least one nozzle **130** may be removed for use with other tools (say spray guns) when the robotic vehicle **100** is not in use or when the spraying of the liquid using the robotic vehicle **100** is not desired. Further, the at least one nozzle **130** may be removed when some other accessory such as a tap, a hose or the like may be required for application with the robotic vehicle **100.** In some embodiments, the at least one nozzle **130** may be removable by use of a tool. In some embodiments, the at least one nozzle **130** may be removable without use of any tools. In some embodiments, the at least one nozzle **130** may be removably coupled with the axle **110.**

In some embodiments, the at least one nozzle **130** may be provided with a cap. The cap may plug an outlet of the at least one nozzle **130** when the at least one nozzle **130** is not required for use with any application for which the at least one nozzle **130** is intended for use. In some embodiments, the at least one nozzle **130** may be supplemented with a stencil with differently shaped openings to produce different spray patterns of the liquid emitted or sprayed from the at least one nozzle **130.** In some embodiments, the at least one nozzle **130** may be provided with a filter to filter out the impurities in the liquid being utilized for spray.

In some embodiments, the at least one nozzle **130** is pivotably coupled with the robotic vehicle **100.** The at least one nozzle **130** is pivotable and may constantly change the orientation based on output from the control system to produce different spray parameters such as spray patterns, spray distances and the like. The at least one nozzle **130** is pivotable along any direction relative to the robotic vehicle **100** without limiting the scope of the present disclosure in any manner.

With continued reference to **FIG. 1****,** the robotic vehicle **100** includes a payload **140.** The payload **140** may inherently improve the stability of the robotic vehicle **100.** The payload **140** is disposed between the first wheel **120A** and the second wheel **120B.** The payload **140** defines a central payload axis **X-X'** of the payload **140.** Further the payload **140** is defined around the axis **Y-Y'** passing through the center "C1" of the first wheel **120A** and the center "C2" of the second wheel **120B.** The central payload axis **X-X'** of the payload **140 is** parallel to the axis **Y-Y'** passing through the center "C1" of the first wheel **120A** and the center "C2" of the second wheel **120B** (as shown in **FIGS. 1** and **2****).** In the preferred embodiment (as shown in **FIGS. 1** and **2****),** the pair of wheels **120A, 120B** rotate along the axle **110** and the axis **Y-Y'** or **X-X'.** In some embodiments, the position of centers "C1, C2" relative to the central payload axis **X-X'** may be varied as per requirement when the robotic vehicle **100** moves within the defined working area..

In some embodiments, the payload **140** may include the at least one nozzle **130** coupled to the payload **140.** In some embodiments, the payload **140** is a water reservoir **142** (as shown in **FIG. 1****).** The water reservoir **142** may serve to store the water for use with various spraying applications. The water reservoir **142** with added weight of the water may serve to improve the stability of the robotic vehicle **100.** The water reservoir **142** does not touch the ground surface "G" when disposed between the first wheel **120A** and the second wheel **120B** for smooth and efficient movement of the robotic vehicle **100** within the defined working area. The water reservoir **142** is provided with an appropriate ground clearance therein.

The water reservoir **142** of the present disclosure is cylindrical in shape. However, actual implementation of the present disclosure may have any shape, type, number, and dimensions of the water reservoir **142** without limiting the scope of the present disclosure in any manner whatsoever. The water reservoir **142** may be fluidly connected with the at least one nozzle **130**coupled with the robotic vehicle **100.** The at least one nozzle **130** may receive water from the water reservoir **142** for executing various spraying, sprinkling applications, or simply delivering water for various applications such as but not limited to irrigation.

In an embodiment, the water reservoir **142** may also include an internal bifurcation of the water reservoir in two or more compartments. Any one of such compartments may be used to store the control system therein to control the functionality of the water reservoir **142.**

In some embodiments, as illustrated in **FIG. 2****,** the payload **140** is a hose reel **144.** The hose reel **144** may also provide a flow of fluid, such as water, in spaces, such as lawns, parks, and the like. A hose of the hose reel **144** may be connected to a tap or any other liquid source. The robotic vehicle **100** may then move and operate within the defined working area thereby unrolling or unwinding the hose. The liquid from the liquid source may then be sprayed by the at least one nozzle **130** coupled with the robotic vehicle **100.** The hose reel **144** and the at least one nozzle **130** may be fluidly coupled by any suitable means or method known in the art. Further, the hose reel **144** may also serve to inherently improve the stability of the robotic vehicle **100** by virtue of a lowered center of gravity of the robotic vehicle **100.** The hose reel **144** may be driven by the drive module which may be same or different from the drive module of the pair of wheels **120A, 120B.** The drive module may rotate the hose reel **144** in the winding direction as well as the unwinding direction for automated winding and unwinding of the hose on the hose reel **144.**

In some embodiments, the payload **140** may be a storage volume. The storage volume may be partitioned by a wall such that the one part of the storage volume may include the control system and the other part of the storage volume may store the liquid to be sprayed. The payload **140** may be a retrofittable equipment or an accessory for facilitating and controlling various liquid spraying applications.

In some embodiments, the payload **140** is dependent on the pair of wheels **120A, 120B** such that the payload **140** may rotate with the rotation of the pair of wheels **120A, 120B.** The payload **140,** such as, but not limited to, the hose reel **144** may rotate in proportion to the rotation of the pair of wheels **120A, 120B** to wind and unwind the hose reel **144** for various application such as irrigation, cleaning, and the like. The direction of rotation of the payload **140** may or may not be same as the direction of rotation of the pair of wheels **120A, 120B.** The axle **110** and the hose reel **144** or the axle **110** and the pair of wheels **120A, 120B** may be mechanically connected to each other using any suitable coupling mechanism known in the art without limiting the scope of the present disclosure in any manner.

In some embodiments, the payload **140** is independent of the pair of wheels **120A, 120B** such that the payload **140** does not rotate with the rotation of the pair of wheels **120A, 120B.** The payload **140,** such as, but not limited to, the water reservoir **142** may not be required to rotate and hence may be mechanically disengaged from the axle **110** or the pair of wheels **120A, 120B.** An example may be that the payload **140** may be rotatable about the central payload axis **X-X'.** When the robotic vehicle **100** moves on the ground surface "G", the payload **140** may then remain stationary and not rotate along with the movement of the pair of wheels **120A, 120B.** The disengagement may also be accomplished by any other means or method known in the art.

In an embodiment, as illustrated in **FIG. 3****,** the central payload axis **X-X'** of the payload **140** is offset by a length "L" relative to the respective centers "C1, C2" of the first wheel **120A** and the second wheel **120B** or to the axis **Y-Y'** passing through the first wheel **120A** and the second wheel **120B.** The central payload axis **X-X'** may be marginally set at an offset to the respective centers "C1, C2" or the axis **Y-Y'** to allow just enough ground clearance for allowing smooth and efficient working of the various payloads such as, but not limited to, the hose reel **144.** Thus, the hose reel **144** and the hose may be clear off the ground surface "G" and may not interfere with the movement and operation of the robotic vehicle **100** within the defined working area.

Further, the stability of the robotic vehicle **100** is not compromised due to the offset. In some embodiments, the length "L" of the offset may be 2-3 cm. However, in actual implementation of the disclosure, the "L" of the offset may be any other suitable value as well, which may be suitable for application with various aspects of the present disclosure, without limiting the scope of the present disclosure in any manner. The offset may be provided by any suitable means or method known in the art.

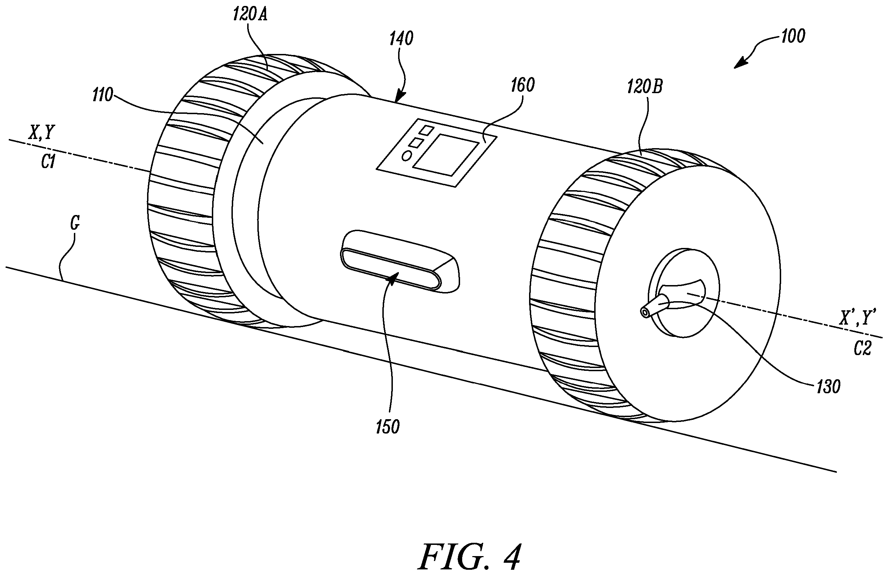

In an embodiment, as illustrated in **FIG. 4****,** the payload **140** of the robotic vehicle **100** is provided with an inlet opening **150.** The inlet opening **150** may serve as a water inlet for the payload **140.** However, the inlet opening **150** may have different uses as per the application requirements. Further, payload **140** is provided with a user interface **160.** The user interface **160** may be configured with the control system of the robotic vehicle **100.** The control system may take the input of a user via the user interface **160** and may accordingly operate the robotic vehicle **100.** In some embodiments, the user interface **160** may be wirelessly connected to the smartphone.

Thus, the present disclosure provides the two-wheeled robotic vehicle **100** that may be used for wide range of applications such as, but not limited to, irrigation, cleaning, firefighting, and the like, that may involve spraying of the liquid. The robotic vehicle **100** includes the payload **140** that is retrofitted with the robotic vehicle **100.** The payload **140** may be the storage volume, the liquid spraying equipment or some related accessory. Further the payload **140** may include control system for autonomous working of the robotic vehicle **100.** Furthermore, the payload **140** may improve the stability of the robotic vehicle **100.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Robotic Vehicle
- **110**: Axle
- **112**: First End
- **120A**: First Wheel
- **120B**: Second Wheel
- **130**: Nozzle
- **140**: Payload
- **142**: Water Reservoir
- **144**: Hose Reel
- **150**: Inlet Opening
- **160**: User Interface
- **X-X'**: Central Payload Axis
- **Y-Y'**: Axis
- **G**: Ground Surface
- **L**: Offset
- **C1**: Center (First Wheel)
- **C2**: Center (Second Wheel)

## Claims

1. A robotic vehicle **(100)** for irrigation of a ground surface **(G),** the robotic vehicle **(100)** comprising:
a pair of wheels **(120A, 120B)** adapted to propel the robotic vehicle **(100)** on the ground surface **(G),** wherein the pair of wheels **(120A, 120B)** includes a first wheel **(120A)** and a second wheel **(120B);**
at least one nozzle **(130),** wherein the nozzle **(130)** is adapted to spray a liquid;
the robotic vehicle **(100)** further includes a payload **(140)** disposed between the first wheel **(120A)** and the second wheel **(120B),**
**characterized in that**:
the payload **(140)** is defined around an axis **(Y-Y')** passing through a center **(C1) of** the first wheel **(120A)** and a center **(C2)** of the second wheel **(120B),**
wherein the at least one nozzle **(130)** is along or angled to the center (C1, **C2)** of both the wheels **(120A, 120B)** of the pair of wheels **(120A, 120B),** and
wherein the at least one nozzle **(130)** is coupled with the axle **(110)** of the robotic vehicle **(100).**

2. The robotic vehicle **(100)** of claim 1,
wherein the payload **(140)** is a water reservoir **(142).**

3. The robotic vehicle **(100)** of any of the previous claims,
wherein the payload **(140)** is a hose reel **(144).**

4. The robotic vehicle **(100)** of any of the previous claims,
wherein a central payload axis **(X-X')** of the payload **(140)** is offset by a length **(L)** relative to the axis **(Y-Y')** passing through the center **(C1)** of the first wheel **(120A)** and the center **(C2)** of the second wheel **(120B).**

5. The robotic vehicle **(100)** of any of the previous claims,
wherein the payload **(140)** is independent of the pair of wheels **(120A, 120B)** such that the payload **(140)** does not rotate with rotation of the pair of wheels **(120A, 120B).**

6. The robotic vehicle **(100)** of any of the previous claims,
wherein the payload **(140)** is dependent on the pair of wheels **(120A, 120B)** such that the payload **(140)** rotates with rotation of the pair of wheels **(120A, 120B).**

7. The robotic vehicle **(100)** of any of the previous claims,
wherein the pair of wheels **(120A, 120B)** are mechanically linked by an axle **(110).**

8. The robotic vehicle **(100)** of any of the previous claims,
wherein the at least one nozzle **(130)** is removably coupled with the robotic vehicle **(100).**

9. The robotic vehicle **(100)** of any of the previous claims,
wherein the at least one nozzle **(130)** is pivotably coupled with the robotic vehicle **(100).**

10. The robotic vehicle **(100)** of any of the previous claims,
wherein the pair of wheels **(120A, 120B)** is driven by a drive module.

11. The robotic vehicle **(100)** of claim 10,
wherein the drive module includes an electric motor.

## Patentansprüche

1. Roboterfahrzeug **(100)** zur Bewässerung einer Bodenoberfläche **(G),** wobei das Roboterfahrzeug **(100)** umfasst:
ein Paar Räder **(120A, 120B),** die angepasst sind, um das Roboterfahrzeug **(100)** auf der Bodenoberfläche **(G)** anzutreiben, wobei das Paar Räder **(120A, 120B)** ein erstes Rad **(120A)** und ein zweites Rad **(120B)** einschließt;
mindestens eine Düse **(130),** wobei die Düse **(130)** dazu angepasst ist, eine Flüssigkeit zu versprühen;
das Roboterfahrzeug **(100)** schließt ferner eine Nutzlast **(140)** ein, die zwischen dem ersten Rad **(120A)** und dem zweiten Rad **(120B**)angeordnet ist, **dadurch gekennzeichnet, dass:**
die Nutzlast **(140)** um eine Achse **(Y-Y')** definiert ist, die durch ein Zentrum **(C1)** des ersten Rads **(120A)** und ein Zentrum **(C2)** des zweiten Rads **(120B)** verläuft,
wobei die mindestens eine Düse **(130)** entlang oder schräg verlaufend zu dem Zentrum **(C1, C2)** beider Räder **(120A, 120B)** des Paars von Rädern **(120A, 120B)** angeordnet ist, und
wobei die mindestens eine Düse **(130)** mit der Achse **(110)** des Roboterfahrzeugs **(100)** gekoppelt ist.

2. Roboterfahrzeug **(100)** nach Anspruch 1,
wobei die Nutzlast **(140)** ein Wassertank **(142)** ist.

3. Roboterfahrzeug **(100)** nach einem der vorstehenden Ansprüche,
wobei die Nutzlast **(140)** eine Schlauchtrommel **(144)** ist.

4. Roboterfahrzeug **(100)** nach einem der vorstehenden Ansprüche,
wobei eine zentrale Nutzlastachse **(X-X')** der Nutzlast **(140)** um eine Länge **(L)** relativ zu der Achse **(Y-Y')** versetzt ist, die durch das Zentrum **(C1)** des ersten Rades **(120A)** und das Zentrum **(C2)** des zweiten Rades **(120B)** verläuft.

5. Roboterfahrzeug **(100)** nach einem der vorstehenden Ansprüche,
wobei die Nutzlast **(140)** unabhängig von dem Paar von Rädern **(120A, 120B)** ist, so dass die Nutzlast **(140)** nicht mit der Rotation des Paars von Rädern **(120A, 120B)** rotiert.

6. Roboterfahrzeug **(100)** nach einem der vorstehenden Ansprüche,
wobei die Nutzlast **(140)** von dem Paar von Rädern **(120A, 120B)** abhängig ist, so dass die Nutzlast **(140)** mit der Rotation des Paars von Rädern **(120A, 120B)** rotiert.

7. Roboterfahrzeug **(100)** nach einem der vorstehenden Ansprüche,
wobei das Paar von Rädern **(120A, 120B)** mechanisch durch eine Achse **(110)** verbunden ist.

8. Roboterfahrzeug **(100)** nach einem der vorstehenden Ansprüche,
wobei die mindestens eine Düse **(130)** lösbar mit dem Roboterfahrzeug **(100)** gekoppelt ist.

9. Roboterfahrzeug **(100)** nach einem der vorstehenden Ansprüche,
wobei die mindestens eine Düse **(130)** schwenkbar mit dem Roboterfahrzeug **(100)** gekoppelt ist.

10. Roboterfahrzeug **(100)** nach einem der vorstehenden Ansprüche,
wobei das Paar von Rädern **(120A, 120B)** von einem Antriebsmodul angetrieben wird.

11. Roboterfahrzeug **(100)** nach Anspruch 10,
wobei das Antriebsmodul einen Elektromotor einschließt.

## Revendications

1. Véhicule robotisé **(100)** pour l'irrigation d'une surface au sol **(G),** le véhicule robotisé **(100)** comprenant :
une paire de roues **(120A, 120B)** conçue pour propulser le véhicule robotisé **(100)** sur la surface au sol **(G),** dans lequel la paire de roues **(120A, 120B)** comporte une première roue **(120A)** et une seconde roue **(120B)** ;
au moins une buse **(130),** dans lequel la buse **(130)** est configurée pour pulvériser un liquide ;
le véhicule robotisé **(100)** comporte en outre une charge utile **(140)** disposée entre la première roue **(120A)** et la seconde roue **(120B), caractérisé en ce que** :
la charge utile **(140)** est définie autour d'un axe **(Y-Y')** passant à travers un centre **(C1)** de la première roue **(120A)** et un centre **(C2)** de la seconde roue **(120B),** dans lequel l'au moins une buse **(130)** est le long du centre **(C1, C2)** des deux roues **(120A, 120B)** de la paire de roues **(120A, 120B)** ou est inclinée par rapport à celui-ci, et dans lequel l'au moins une buse **(130)** est accouplée à l'essieu **(110)** du véhicule robotisé **(100).**

2. Véhicule robotisé **(100)** selon la revendication 1,
dans lequel la charge utile **(140)** est un réservoir d'eau **(142).**

3. Véhicule robotisé **(100)** selon l'une quelconque des revendications précédentes,
dans lequel la charge utile **(140)** est un enrouleur pour tuyau **(144).**

4. Véhicule robotisé **(100)** selon l'une quelconque des revendications précédentes,
dans lequel un axe de charge utile central **(X-X')** de la charge utile **(140)** est décalé d'une longueur **(L)** par rapport à l'axe **(Y-Y')** passant à travers le centre **(C1)** de la première roue **(120A)** et le centre **(C2)** de la seconde roue **(120B).**

5. Véhicule robotisé **(100)** selon l'une quelconque des revendications précédentes,
dans lequel la charge utile **(140)** est indépendante de la paire de roues **(120A, 120B)** de sorte que la charge utile **(140)** ne tourne pas avec la rotation de la paire de roues **(120A, 120B).**

6. Véhicule robotisé **(100)** selon l'une quelconque des revendications précédentes,
dans lequel la charge utile **(140)** est dépendante de la paire de roues **(120A, 120B)** de sorte que la charge utile **(140)** tourne avec la rotation de la paire de roues **(120A, 120B).**

7. Véhicule robotisé **(100)** selon l'une quelconque des revendications précédentes,
dans lequel la paire de roues **(120A, 120B)** est mécaniquement reliée par un essieu **(110).**

8. Véhicule robotisé **(100)** selon l'une quelconque des revendications précédentes,
dans lequel l'au moins une buse **(130)** est accouplée de manière amovible au véhicule robotisé **(100).**

9. Véhicule robotisé **(100)** selon l'une quelconque des revendications précédentes,
dans lequel l'au moins une buse **(130)** est accouplée de manière pivotante au véhicule robotisé **(100).**

10. Véhicule robotisé **(100)** selon l'une quelconque des revendications précédentes,
dans lequel la paire de roues **(120A, 120B)** est entraînée par un module d'entraînement.

11. Véhicule robotisé (100) selon la revendication 10,
dans lequel le module d'entraînement comporte un moteur électrique.
